**Europäisches Patentamt**

**European Patent Office**

**Office européen des brevets**

(11) Veröffentlichungsnummer: **0 046 900**
**B2**

(12) **NEUE EUROPÄISCHE PATENTSCHRIFT**

(45) Veröffentlichungstag der neuen Patentschrift:
**18.04.90**

(21) Anmeldenummer: **81106267.8**

(22) Anmeldetag: **12.08.81**

(51) Int. Cl.⁵: **C 02 F 3/12,** C 02 F 3/10,
C 02 F 3/30

(54) **Verfahren und Vorrichtung zur biologischen Reinigung von Abwasser.**

(30) Priorität: **01.09.80 DE 3032882**

(43) Veröffentlichungstag der Anmeldung:
**10.03.82 Patentblatt 82/10**

(44) Bekanntmachung des Hinweises auf die
Patenterteilung:
**18.04.90 Patentblatt 90/16**

(45) Bekanntmachung des Hinweises auf die
Entscheidung über den Einspruch:
**31.10.84 Patenblatt 84/44**

(84) Benannte Vertragsstaaten:
**AT BE CH DE FR GB IT LI NL**

(56) Entgegenhaltungen:
**AT-B- 248 354**
**DE-A-2 905 371**
**DE-B-2 550 818**
**DE-B-2 839 872**

**Lehr- und Handbuch der Abwassertechnik, Bd.
II, S. 455 (1975) Verlag von Wilhelm Ernst &
Sohn
Helmer & Sekoulov "Weitergehende
Abwasserreinigung", S. 45 (1977) Deutscher
Fachschriften Verlag**

(73) Patentinhaber: **Linde Aktiengesellschaft
Abraham-Lincoln-Strasse 21
D-6200 Wiesbaden (DE)**

(72) Erfinder: **Fuchs, Uwe
Heiterwanger Strasse 46
D-8000 München 70 (DE)**

(74) Vertreter: **Schaefer, Gerhard, Dr.
Linde Aktiengesellschaft Zentrale
Patentabteilung
D-8023 Höllriegelskreuth (DE)**

## Beschreibung

Die Erfindung betrifft ein Verfahren zur biologischen Reinigung von Abwasser in einer Belebungsanlage mit zwei Stufen, bei dem in der ersten Stufe im wesentlichen die Hauptmenge der organischen Verunreinigungen abgebaut wird und das Abwasser nach einer Zwischenklarung der zweiten Stufe zugeführt wird, in der der Restabbau durchgeführt wird sowie Stickstoffverbindungen in Gegenwart von nitrifizierenden Bakterien oxidiert werden sowie eine Vorrichtung zur Durchführung des Verfahrens.

Bei einem solchen Verfahren wird Abwasser zunächst in der ersten Stufe mit belebtem Schlamm unter gleichzeitiger Zuführung von Sauerstoff vermischt. Durch die Tätigkeit der in dem belebtem Schlamm enthaltenen aeroben Mikroorganismen werden die organischen Schmutzstoffe des Abwassers zum Teil in Bakteriensubstanz umgewandelt und zum Teil mittels Sauerstoff zu $CO_2$ und Wasser umgesetzt, so daß in der erste Stufe weitgehend die Kohlenstoffverbindungen oxidiert werden. In der zweiten Stufe erfolgt dann nach dem Überleiten des Abwasser-Belebtschlamm-Gemisches aus der ersten Stufe der Restabbau sowie bei genügender Sauerstoffzufuhr, ausreichender Wassertemperatur und niedriger Schlammbelastung eine Nitrifikation des Abwassers, bei der durch die im Schlamm vorhandenen autotrophen Bakterien Ammonium-Stickstoff praktisch vollständig zu Nitrat oxidiert wird. Zur Sauerstoffversorgung der Bakterien ist es bekannt, die Begasungsbecken beider Stufen mit Luft oder einem mehr Volumenprozent Sauerstoff als Luft enthaltenden Gas zu begasen.

Da bei einem solchen Verfahren in der ersten Stufe bereits die Hauptmenge der organischen Schmutzstoffe abgebaut wird, stellt sich in der zweiten Stufe nur noch eine geringe BSB-Belastung ein, weshalb durch den Mangel an Nährstoffen und Schwebstoffen ein nur sehr schwer absetzbarer Schlamm gebildet wird, der große Nachklärbecken mit Schlammräumeinrichtungen bei auftretendem Schwimmschlamm erforderlich macht. Aber auch bei vorhandensein großer Nachklärbecken kann nicht verhindert werden, daß bei hoher hydraulischer Belastung und bei Schlammauftreiben, das in jeder Kläranlage aufgrund von Denitrifikationsvorgängen auftritt ein großer Anteil der Schlammpartikel zusammen mit den nur sehr langsam wachsenden nitrizierenden Bakterien aus dem Nachklärbecken in den vorfluter ausgetragen wird. Abgesehen von der dadurch bedingten Beeinträchtigung der Qualität des aus der Anlage abgezogenen, gereinigten Abwassers durch Trübstoffe führt dies auch dazu, daß ein Teil der nitrifizierenden Bakterien für den Nitrifikationsvorgang nicht mehr zur Verfügung steht.

Neben solchen zweistufigen Nitrifikationsverfahren mit gebundenen Schlammkreisläufen ist auch ein Verfahren zur biologischen Vollreinigung von Abwasser in drei unmittelbar hintereinander geschalteten, von unten nach oben durchströmten Druckreaktoren zur getrennten Oxidation von Kohlenstoffverbindungen, Nitrifikation und Denitrifikation bekannt (DE—B— 22 550 818). Dabei sind alle Reaktoren mit offenporigen, flexiblen Polyester- bzw. Polyurethanschaumstoffkörpern, die als Haftkörper für die Biomasse und als Kolloidfänger dienen, gefüllt. Zur Erzielung eines hohen Sauerstoffeintrags werden die Schaumstoffkörper in den einzelnen Reaktoren intermittierend zusammengedrückt und wieder entspannt. Die Betriebsweise ist dabei so, daß Luft, Wasser und Belabtschlamm aus dem ersten in den zweiten Druckreaktor und aus diesem in den dritten Druckreaktor übergeleitet und eine Nitrifikation sowohl im ersten als auch im zweiten Druckreaktor mit Hilfe von autotrophen Bakterien durchgeführt wird. Um auch bei verringerter Aufenthaltszeit eine ausreichende Nitrifikation zu erreichen, muß bei diesem bekannten Verfahren im wesentlichen unter erhöhtem Druck und bei erhöhter Temperatur gearbeitet werden.

Darüber hinaus ist aus der DE—B—22 839 872 auch ein Verfahren zur biologischen Abwasserreinigung bekannt, bei dem eine vollbiologische Totalaufbereitung der Abwässer mit Nitrifikation und Denitrifikation in einer einzigen Verfahrensstufe durchgeführt wird. Dabei wird das Abwasser über eine lose Schüttung stückiger Schaumstoffkörper geleitet, die in einem Drehbehälter umgewälzt und bis über die Wasseroberfläche in die Luft- oder Sauerstoffatmosphäre angehoben werden.

Dabei besteht ein wesentliches Merkmale des Verfahrens darin, daß die Schaumstoffteilchen durch die Drehbewegung zwangsweise und abwechselnd durch das zu reinigende Abwasser und die sauerstoffhaltige Atmosphäre über dem Wasserspiegel bewegt werden, wobei noch durch die Flexibilität der Schaumstoffteilchen ein abwechselndes Zusammendrücken und Entspannen der Schaumstoffteilchen bewirkt wird.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise die Qualität des gereinigten Abwassers im Hinblick auf den Rest-CSB- und Rest-BSB-Gehalt verbessert und eine hohe Nitrifikationsleistung erreicht werden kann.

Diese Aufgabe wird erfindungsgemäß dadurch gelöst, daß das aus der ersten Stufe ablaufende, teilgereinigte Abwasser in der zweiten Stufe durch ein voll durchgemischtes Belebungskecken mit einem Trägermaterial als Ansiedlungsfläche für die nitrifizierenden Bakterien geleitet wird, daß im Belebungsbecken der Volumenanteil des Trägermaterials am Gesamtvolumen auf 10—40% eingestellt wird, und daß als Trägermaterial einzelne Stoffteilchen mit einem Durchmesser von 0,5 bis 50 mm, mit einem spezifischen Gewicht von 10 bis 200 $kg/m^3$ sowie mit offenen Makroporen von 0,1 bis 5 mm Durchmesser verwendet werden.

Die Verwendung makroporöser Stoffteilchen mit geringem spezifischen Gewicht als Trägermaterial für die nitrifizierenden Bakterien bietet diesen bei der angegebenen Größe der Stoffteilchen eine große aktive Oberfläche zur Ansiedlung, au der sie sich gleichmäßig verteilen können. Durch die Makroporen des Trägermaterials werden dabei die nitrifizierenden Bakterien zu einem dezentralisierten Wachstum gezwungen, wodurch sich eine wesentliche größere Stoffaustauschfläche als bei der herkömmlichen Belebtschlammflocke ergibt. Außerdem ist bei dieser Porengröße ein Verstopfen der Poren durch Verunreinigungen weitgehend ausgescholssen.

Durch das geringe spezifische Gewicht des Trägermaterials wird darüber hinaus bereits durch das zur Aufrechterhaltung des Nitrifikationsvorganges in Form von Luft und/oder technischem Sauerstoff in den Reaktor beispielsweise über eine fein-, mittel- oder grobblasige Begasung eingetragene sauerstoffhaltige Gas ein Aufwirbeln des Trägermaterials erreicht und kann gegebenenfalls durch eine Umwälzeinrichtung noch verstärkt werden, wodurch der Stoffumsatz verbessert wird. Ein Verlust an Biomasse ist dabei nicht zu befürchten, da die durch die Abwassereinhaltsstoffe wachsenden Mikroorganismen fest in den Poren bis ins Innere des Trägermaterials angesiedelt sind und somit bei mechanischer Einwirkung vor Abrieb geschützt sind. Die angegebene Größe der einzelnen Stoffteilchen führt zu stabilen Bakterienansammlungen und gewährleistet eine Sauerstoffversorgung und einen Stofftransport bis ins Innere eines Stoffteilchens. Andererseits können, falls dies erwünscht ist, durch Limitierung der Konzentration an gelöstem Sauerstoff oder durch die Auswahl eines Durchmessers der einzelnen Stoffteilchen im oberen Bereich der angegebenen Werte im Inneren des Trägermaterials zusätzlich anoxische Zonen erzeugt werden, so daß im Reaktor neben der Nitrifikation noch eine Denitrifikation abläuft. Reicht die auf diese Weise erzielte Denitrifikationsleistung für speziell geforderte Denitrifikationswerte nicht aus, kann des Ablauf des Reaktors der zweiten Stufe einer zusätzlich vor- und/oder nachgeschalteten Denitrifikationszone zugeleitet werden.

Wegen der nur geringen BSB-Belastung kann in der zweiten Stufe aufgrund von Autooxidation eine Überschußschlammproduktion praktisch nicht auftreten. Da die nitrifizierenden Bakterien außerdem stabil in den Makroporen des Trägermaterials fixiert sind und dieses leicht im Reaktor zurückgehalten werden kann, kann die zweite Stufe ohne Nachklärung betrieben werden, wodurch keine Gefahr mehr besteht, daß nitrifizierende Bakterien in den Vorfluter abtreiben. Gleichzeitig entfällt das in jeder Kläranlage durch Denitrifikation hervorgerufene Schwimmschlammproblem.

Vorteilhafterweise werden als Trägermaterial Stoffteilchen aus organischen Polymerverbindungen verwendet. Insbesondere Polyurethan-Schaumstoff oder -Schaumgummi, oder ähnliche Stoffe mit offenen Makroporen, wie sie in der kunststoffverarbeitenden Industrie anfallen, sind gut als Trägermaterial geeignet, wobei noch dazu Rest- und Abfallstücke zum Einsatz kommen können.

Besonders wirtschaftlich wird das erfindungsgemäße Verfahren, wenn auf das Trägermaterial vor dem Durchleiten des Abwassers durch das belebungsbecken Aktivkohlepulver aufgebracht wird. Damit kann bei gleichbleibendem Energieaufwand für den Sauerstoffeintrag in günstigen Fällen eine Verdoppelung der Sauerstoffeintragsleistung erreicht werden.

Eine Vorrichtung zur Durchführung des Verfahrens umfaßt eine Belebungsanlage mit zwei Stufen, bei der der Reaktor der zweiten Stufe von dem Belebungsbecken der ersten Stue durch ein Zwischenklärbecken getrennt ist. Erfindungsgemäß ist eine solche Vorrichtung dadurch gekennzeichnet, daß der Reaktor der zweiten Stufe als voll durchmischtes Belebungsbecken ausgebildet ist, in dem ein Trägermaterial für nitrifizierende Bakterien angeordnet ist, und daß das Trägermaterial einzelne Stoffteilchen mit einem Durchmesser von 0,5 bis 50 mm, mit einem spezifischen Gewicht von 10 bis 200 kg/m³ sowie mit offenen Makroporen von 0,1 bis 5 mm Durchmesser aufweist.

Zum Zurückhalten des Trägermaterials im Reaktor ist zweckmäßigerweise am Ablauf des Reaktors der zweiten Stufe eine Trenneinrichtung, wie beispielsweise ein einfaches Sieb, angeordnet. Darüber hinaus ist vorteilhafterweise im Reaktor der zweiten Stufe ein sich langsam drehendes Paddelwerk als Hilfsaggregat zur besseren Durchmischung angeordnet.

Um das in dem Reaktor der zweiten Stufe nitrifizierte und gegebenenfalls teilweise denitrifizierte Abwasser noch weiter denitrifizieren zu können, ist es von Vorteil, wenn am Ablauf des Reaktors eine Verbindungsleitung zu einer dem Belebungsbecken der ersten Stufe vorgeschalteten oder einer dem Reaktor der zweiten Stufe nachgeschalteten Dentrifikationszone angeschlossen ist.

Bei einer erfindungsgemäßen Vorrichtung kann auf ein Nachklärbecken für die zweite Stufe verzichtet werden, da sich zum einen die nitrifizierenden Bakterien in den Makroporen des Trägermaterials festsetzen und zum anderen das Trägermaterial mit Hilfe der Trenneinrichtung im Reaktor der zweiten Stufe zurückgehalten werden kann und da außerdem aufgrund der nur geringen BSB-Belastung in der zweiten Stufe kaum eine Überschußschlammproduktion gegeben ist.

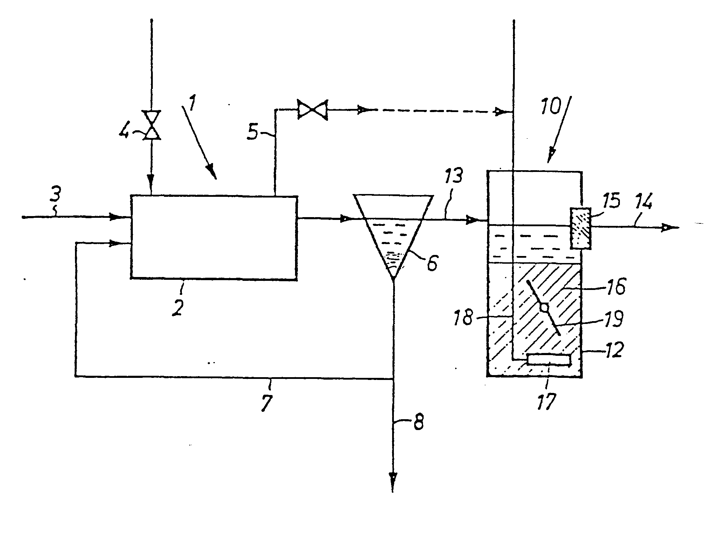

In der Zeichnung ist ein vorteilhaftes Ausführungsbeispiel einer Vorrichtung zur Durchführung des Verfahrens schematisch dargestellt, das nachstehend näher erläutert wird.

In der Figur ist die erste Stufe der Abwassereinigungsanlage mit 1 und die zweite Stufe mit 10 bezeichnet. Die erste Stufe 1 umfaßt ein Belebungsbecken 2 mit einer Abwasserzuleitung 3, einer Gaszuleitung 4 für die Zuleitung von Sauerstoff oder zumindest einem sauerstoffhaltigem Gas und einer Abgasleitung 5 sowie ein dem Belebungsbecken 2 nachgeschaltetes Zwischenklärbecken mit einer Schlammrückleitung 7 zur Zuführung von Schlamm in das Belebungsbecken 2 und einer Schlammableitung 8 zur Ableitung von Überschußschlamm.

Die zweite Stufe 10 umfaßt einen als volldurchmischtes belebungsbecken ausgebildeten Reaktor 12 mit einem an das Zwischenklärbecken 6 der ersten Stufe 1 angeschlossenen Zulauf 13 und einem Ablauf 14 für gereinigtes Abwasser zu einem Vorfluter. Durch eine Trenneinrichtung 15 wird verhindert, daß einzelne Stoffteilchen eines Trägermaterials 16 und mit diesem nitrifizierende Bakterien in den Ablauf 14 gelangen.

In dem Reaktor 12 ist ein Trägermaterial 16 für nitrifizierende Bakterien, vorzugsweise aus Polyurethan-Schaumstoff, angeordnet. Die Versorgung der nitrifizierenden Bakterien mit Sauerstoff erfolgt über eine am Reaktorboden angeordnete Begasungseinrichtung 17, die an eine Gaszuleitung 18 angeschossen ist und beispielsweise eine poröse Platte sein kann. Über die Gaszuleitung 18 kann Luft oder zumindest mit Sauerstoff angereicherte Luft zugeführt werden, wobei gegebenenfalls das Abgas der ersten Stufe zur Sauerstoffanreicherung der Luft verwendet werden kann. Zusätzlich kann die Umwälzung der Trägerteilchen noch mit einem langsam drehenden Paddelwerk 19 verstärkt werden.

Neben der in der Figur gezeigten Anordnung des Zulaufs 13 am oberen Ende des Reaktors 12 der zweiten Stufe 10 kann es unter Umständen auch vorteilhaft sein, den Zulauf 13 am unteren Ende des Reaktors 12 nahe des Reaktorbodens anzuordnen, um auf diese Weise zusätzlich zu der mit dem Gaseintrag erreichten Verwirbelung des Trägermaterials auch durch die dann von unten nach oben gerichtete Wasserströmung durch den Reaktor eine weitere Verwirbelung des Trägermaterials zu erzeugen.

Nachstehend sind Zahlenangaben für ein Auslegungsbeispiel einer erfindungsgemäß mit Schaumstoff gefüllten zweiten Belebungsstufe ohne Nachklärung angegeben;

Trägermaterial
    Polyurethan-Schaumstoffwürfel mit 1 cm Kantenlänge
Trägermasse
    4000 kg $\triangleq$ 20 kg/m$^3$ Reaktorvolumen
Volumen des Reaktors
    200 m$^3$
Abwasserzulaufmenge
    67 m$^3$/h
Belüftungszeit
    3 h
NH$_4$-Stickstoffraumbelastung
    0,8 kgN/m$^3\cdot$d
BSB$_5$-Raumbelastung
    0,6 kg BSB$_5$/m$^3$ – d
NH$^+_4$–N im Zulauf
    100 mgN/l
NH$^+_4$–N im Ablauf
    < 5 mgN/l

BSB$_5$ im Zulauf
    75 mg/l
BSB$_5$ im Ablauf
    < 15 mg/l
CSB im Zulauf
    150 mg/l
CSB im Ablauf
    < 50 mg/l

**Patentansprüche**

1. Verfahren zur biologischen Reinigung von Abwasser in einer Belebungsanlage mit zwei Stufen, bei dem in der ersten Stufe im wesentlichen die Hauptmenge der organischen Verunreinigungen abgebaut wird und das Abwasser nach einer Zwischenklärung der zweiten Stufe zugeführt wird, in der der Restabbau durchgeführt wird sowie Stickstoffverbindungen in Gegenwart von nitrifizierenden Bakterien oxidiert werden, dadurch gekennzeichnet, daß das aus der ersten Stufe ablaufende, teilgereinigte Abwasser in der zweiten Stufe durch ein voll durchmischtes Belebungsbecken mit einem Trägermaterial als Ansiedlungsfläche für die nitrifizierenden Bakterien geleitet wird, daß im Belebungsbecken der Volumenanteil des Trägermaterials am Gesamtvolumen auf 10—40% eingestellt wird, und daß als Trägermaterial einzelne Stoffteilchen mit einem Durchmesser von 0,5 bis 50 mm, mit einem spezifischen Gewicht von 10 bis 200 kg/m$^3$ sowie mit offenen Makroporen von 0,1 bis 5 mm Durchmesser verwendet werden.

2. Verfahren nach Anspruch 1, dadurch gekennzeichnet, daß als Trägermaterial Stoffteilchen aus organischen Polymerverbindungen verwendet werden.

3. Verfahren nach Anspruch 1 oder 2, dadurch gekennzeichnet, daß auf das Trägermaterial vor dem Durchleiten des Abwassers durch das voll durchmischte Belebungsbecken Aktivkohlepulver aufgebracht wird.

4. Vorrichtung zur durchführung des Verfahrens nach einem der Ansprüche 1 bis 3, mit einer Belebungsanlage mit zwei Stufen, bei der der Reaktor der zweiten Stufe von dem Belebungsbecken der ersten Stufe durch ein Zwischenklärbecken getrennt ist, dadurch gekennzeichnet, daß der Reaktor (12) der zweiten Stufe (10) als voll durchmischtes Belebungsbecken ausgebildet ist, in dem ein Trägermaterial (16) für nitrifizierende Bakterien angeordnet ist daß der Volumenanteil des Trägermaterials am Gesamtvolumen des Belebungsbecke der zweiten Stufe 10% bis 40% beträgt, und daß das Trägermaterial einzelne Stoffteilchen mit einem Durchmesser von 0,5 bis 50 mm, mit einem spezifischen Gewicht von 10 bis 200 kg/m$^3$ sowie mit offenen Makroporen von 0,1 bis 5 mm Durchmesser aufweist.

5. Vorrichtung nach Anspruch 4, dadurch gekennzeichnet, daß am Ablauf (14) des Reaktors (12) der zweiten Stufe (10) eine Trenneinrichtung (15) zum Zurückhalten des Trägermaterials (16) angeordnet ist.

6. Vorrichtung nach Anspruch 4 oder 5, dadurch gekennzeichnet, daß am Ablauf (14) des Reaktors (12) eine Verbindungsleitung zu einer dem Belebungsbecken (2) der ersten Stufe vorgeschalteten oder einer dem Reaktor (12) der zweiten Stufe nachgeschalteten Denitrifikationszone angeschlossen ist.

7. Vorrichtung nach einem der Ansprüche 4 bis 6, dadurch gekennzeichnet, daß im Reaktor (12) der zweiten Stufe (10) ein sich langsam drehendes Paddelwerk (19) als Hilfsaggregat zur besseren Durchmischung angebracht ist.

**Revendications**

1. Procédé pour l'épuration biologique d'eaux usées dans une installation d'activation comportant deux étages, où dans le premier étage pratiquement la proportion principale des impuretés organiques est dégradée et où les eaux usées, après une clarification intermediaire sont amenés à un second étage, dans lequel la dégradation restante est effectuée et des composés azotés sont oxydés en présence de bactéries de nitrification, caractérisé en ce que les eaux usées partiellement épurées sortant du premier étage sont canalisées dans le second étage par l'intermédiaire d'un bassin d'activation soumis à un brassage complet et comportant une matière porteuse servant de surface d'accumulation pour les bactéries de nitrification, en ce que dans le bassin d'activation, le rapport du volume de la matière porteuse au volume total est compris entre 10 et 40% en ce que l'on utilise comme matière porteuse des particules individuelles de matière ayant un diamètre compris entre 0,5 et 50 mm, un poids spécifique compris entre 10 et 200 kg/m³ et comportant des macropores ouverts de 0,1 à 5 mm de diamètre.

2. Procédé selon la revendication 1, caractérisé en ce que l'on utilise comme matière porteuse des particules de composés polymères organiques.

3. Procédé selon la revendication 1 ou 2, caractérisé en ce que l'on dépose sur la matière porteuse avant le passage des eaux usées dans le bassin d'activation à brassage intégral de la poudre de charbon actif.

4. Dispositif pour la mise en oeuvre du procédé selon une des revendications 1 à 3, comportant une installation d'activation pourvue de deux étages où le réacteur du second étage est séparé du bassin d'activation du premier étage par un bassin de clarification intermédiaire, caractérisé en ce que le réacteur (12) du second étage (10) est agencé sous forme d'un bassin d'activation à brassage intégral, dans lequel une matière porteuse (16) de bactéries de nitrification est disposée, en ce que la le rapport du volume de la matière porteuse au volume total est compris entre 10 et 40% en ce que l'on utilise comme matière porteuse des particules individuelles de matière ayant un diamètre de 0,5 à 50 mm, un poids spécifique de 10 à 200 kg/m³ et comportant des macropores ouverts de 0,1 à 5 mm de diamètre.

5. Dispositif selon la revendication 4, caractérisé en ce qu'il est prévu à la sortie (14) du réacteur (12) du second étage (10) un dispositif séparateur (15) pour retenir la matière porteuse.

6. Dispositif selon la revendication 4 ou 5, caractérisé en ce qu'il et prévu à la sortie (14) du réacteur (12) un conduit de liaison avec une zone de dénitrification branchée en amont du bassin d'activation (2) du premier étage ou bien en aval du réacteur (12) du second étage.

7. Dispositif selon une des revendications 4 à 6, caractérisé en ce qu'il est prévu dans le réacteur (12) du second étage (10) un mécanisme à palettes (19) tournant lentement et servant de groupe auxiliaire pour améliorer le brassage.

**Claims**

1. A process for the biological purification of sewage in a two-stage activated sludge plant in which the bulk of the organic impurities are essentially decomposed in the first stage and after intermediate clearing the sewage is conducted to the second stage in which the residual decomposition is carried out and nitrogen compounds are oxidized in the presence of nitrifying bacteria, characterised in that the partially purified sewage running off from the first stage is passed in the second stage through a thoroughly mixed activated sludge basin, having a carrier material as a colonising surface for the nitrifying bacteria; that in the activated sludge basin the share of the volume of the carrier material in the total volume is adjusted to 10%—40%, and that individual particles of material are used as a carrier material which have a diameter of 0.5 to 50 mm, a specific gravity of 10 to 200 kg/m³ and open macropores with a diameter of 0.1 to 5 mm.

2. A process as claimed in Claim 1, characterised in that particles consisting of organic polymer compounds are used as carrier material.

3. A process as claimed in Claim 1 or 2, characterised in that activated carbon powder is applied onto the carrier material before the sewage is passed through the thoroughly mixed activated sludge basin.

4. Apparatus for carrying out the process as claimed in one of Claims 1 to 3, comprising a two-stage activated sludge plant in which the reactor of the second stage is separated from the activated sludge basin of the first stage by means of an intermediate clearing basin, characterised in that the reactor (12) of the second stage (10) is designed as a thoroughly mixed activated sludge basin, in which a carrier material (16) for nitrifying bacteria is arranged, that the share in volume of the carrier material in the total volume of the activated sludge basin of the second stage amounts to 10% to 40%, and that the carrier material has individual particles of material which have a diameter of 0.5 to 50 mm, a specific gravity of 10 to 200 kg/m³ and open macropores with a diameter of 0.1 to 5 mm.

5. Apparatus as claimed in Claim 4, characterised in that at the outlet (14) of the reactor (12) of the second stage (10) there is arranged a spearating device (15) for retaining the carrier material (16).

6. Apparatus as claimed in Claims 4 or 5, characterised in that a connecting line to a denitrification zone preceding the activated sludge basin (2) of the first stage, or to a denitrification zone following the reactor (12) of the second stage, is connected to the outlet (14) of the reactor (12).

7. Apparatus as claimed in one of Claims 4 to 6, characterised in that, in the reactor (12) of the second stage (10), there is arranged a slowly rotating paddle device (19) as an auxiliary unit for improved mixing.